Europäisches Patentamt

European Patent Office

Office européen des brevets

(11) Publication number: **0 124 176**
**B1**

## EUROPEAN PATENT SPECIFICATION

(45) Date of publication of patent specification: **04.01.89**

(51) Int. Cl.⁴: **C 08 F 14/06, C 08 F 2/20**

(21) Application number: **84200582.9**

(22) Date of filing: **24.04.84**

(54) Vinyl chloride polymers.

(30) Priority: **26.04.83 NL 8301462**

(43) Date of publication of application:
**07.11.84 Bulletin 84/45**

(45) Publication of the grant of the patent: ·
**04.01.89 Bulletin 89/01**

(84) Designated Contracting States:
**AT BE DE FR GB IT NL SE**

(56) References cited:
**EP-A-0 002 861**
**EP-A-0 033 577**

(73) Proprietor: **STAMICARBON B.V.**
**Mijnweg 1**
**NL-6167 AC Geleen (NL)**

(72) Inventor: **Tuyt, Robert Corstiaan**
**Pastoor Creuzenplantsoen 9**
**NL-6231 EV Meerssen (NL)**
Inventor: **Evens, Georges Gerard**
**Oude Baan 716**
**B-3630 Maasmechelen (BE)**
Inventor: **Meyer, Peter Johan Nicolaas**
**Burg. Luytenstraat 31**
**NL-6151 GE Munstergeleen (NL)**
Inventor: **Pons, Dick Adriaan**
**Fazantstraat 55**
**NL-3145 CA Maassluis (NL)**

Courier Press, Leamington Spa, England.

# EP 0 124 176 B1

**Description**

The invention relates to a process for the suspension polymerization of vinyl chloride with monomer-soluble radical-forming initiators and possibly in the presence of suspending agents to form vinyl chloride polymers with at least 70% (wt) vinyl chloride units having good processing characteristics.

The suspension polymerization of vinyl chloride, optionally with monomers copolymerizable with it, is generally known and is carried out extensively on a technical scale. Liquid vinyl chloride is suspended in water and polymerized with monomer-soluble radical-forming initiators at temperatures between 30°C and 80°C. The polymerization takes place in the monomer drops. Customary initiators are lauryl peroxide, di(2 - ethylhexyl) - peroxide dicarbonate, dialkylpercarbonates, particularly diisopropylpercarbonate, azo compound, particularly azo - bis - isobutyronitrile, sulphonyl peroxides, particularly acetylcyclohexane-sulphonyl peroxide.

Suspending agents are used to promote and to stabilize the distribution of monomer resp. monomers in the aqueous phase and to prevent the agglomeration of polymer particles during the polymerization. Customary suspending agents are gelatin, guar, gum arabic, cellulose derivatives, polyvinyl alcohols, polymeric suspending agents based on maleic acid or acrylic acid, for instance copolymers of maleic acid and vinyl acetate, xanthene gum, polyacrylamide and copolymers of acrylamide and other monomers.

It has been found that particle size, porosity and bulk density of the polymer, particularly of polyvinyl chloride, and consequently the processing characteristics too, can be influenced by the choice of the suspending agents. Particularly vinyl chloride polymers incorporating plasticizers have been found to show a definite influence of the suspending agents used in the polymerization. For the take-up of plasticizers the polymer must have sufficient porosity. Usually the occurrence of so-called fish eyes, these are ungelled particles, is less frequent as the porosity increases.

Since the harmful properties of vinyl chloride are known, the requirements imposed for the removal thereof from the polymer have been increased continually. It has been found that the removal of vinyl chloride from the polymer is easier as the porosity increases.

High porosity of the polymer is usually accompanied by a low bulk density. It has been found, however, that with a given porosity the bulk density varies. As the bulk density increases, the processability, particularly the throughput in extruders, improves. Therefore, the preparation of vinyl chloride polymers is aimed at, for which reason the bulk density at a certain desired porosity is as high as possible.

Owing to the influence of the suspending agents on a range of polymer properties, the choice thereof is very important. Through the modification of suspending agents, further improvement of the properties of the polymer to be prepared is aimed at.

It is known for this purpose to add to the customary primary suspending agent, which is understood to mean a water-soluble suspending agent, a secondary suspending agent, which is understood to mean a suspending agent that does not dissolve in water. The results obtained are then far better than those obtained when just the primary suspending agent is used.

Thus it is known from European patent specification 2861 that vinyl chloride polymers having good porosity, a large BET surface, a narrow particle size distribution, few fish eyes in processing and good plasticizer take-up can be prepared by suspension polymerization of vinyl chloride, if so desired with monomers copolymerizable with it, with monomer-soluble radical-forming initiators, and in the presence of primary and secondary suspending agents by carrying out the polymerization in the presence of 0.005—0.5 part by weight of a primary suspending agent known per se per 100 parts by weight monomer and as secondary suspending agent 0.005—0.5 part by weight, per 100 parts by weight monomer, of a polyvinyl alcohol with a degree of polymerization of at least 250 and preferably at least 350 with a degree of solvolysis of 40—70 moles % with a narrow distribution of the degree of hydrolysis. The primary suspending agent used is preferably a polyvinyl alcohol with a degree of solvolysis of 70—90 moles %.

The said polyvinyl alcohols, which are characterized by, inter alia, a certain degree of solvolysis, and which are used as suspending agents, are prepared by solvolysis of polyvinyl acetate, because polyvinyl alcohol cannot be prepared direct by polymerization of vinyl alcohol, which is tautomeric with acetaldehyde. In an aqueous or alcoholic medium polyvinyl acetate can be converted into polyvinyl alcohol with an acid or an alkali as catalyst. During hydrolysis in an aqueous medium acetic acid and during alcoholysis in an alcoholic medium an acetic ester is released. The term solvolysis comprises both conversions. The solvolysis may be complete, but also incomplete. An incompletely solvolyzed polyvinyl alcohol can be regarded as a copolymer of vinyl acetate and vinyl alcohol, but is in practice called polyvinyl alcohol, with the degree of hydrolysis, or rather the degree of solvolysis, being mentioned.

The action of secondary suspending agents like polyvinyl alcohol with a degree of solvolysis of 40—70 moles %, preferably 50—60 moles %, and a narrow distribution of the degree of hydrolysis, is explained in European patent specification 2861 from the suspicion that this secondary suspending agent is forced into the interface of the vinyl chloride monomer and the water, in consequence of which it has a very favourable effect on the structure of the PVC to be formed.

In the process according to the invention a result is achieved, quite unexpectedly better than that according to European patent specification 2861, viz. a lower fish eye number as defined below.

EP—A—33577 describes the use of polyvinylacetate which has a degree of solvolysis of 2—14 mol % in the manufacture of PVC.

2

The invention relates to a process for preparing vinyl chloride polymers by suspension polymerization in a polymerization reactor of vinyl chloride, optionally in combination with at most 30% (wt) of one or more monomers copolymerizable therewith, with monomer-soluble radical-forming initiators and optionally in the presence of primary suspending agents in a quantity of preferably 0.005—0.5 part by weight primary suspending agent per 100 parts by weight monomer, characterized in that, before or during the polymerization 0.01—0.5 part by weight of at least one polyvinyl ester with an average degree of solvolysis lower than 70 moles % and preferably lower than 55 moles % and particularly lower than 25 moles % is supplied to the polymerization reactor per 100 parts by weight starting monomer, which polyvinyl ester is chosen from the polymeric vinyl esters of one or more aliphatic and/or aromatic carboxylic acids with 3—20 C atoms per molecule possibly copolymerized with one or more other monomers, preferably chosen from unsaturated mono and dicarboxylic acids, such as acrylic acid, methacrylic acid, crotonic acid, fumaric acid an itaconic acid, or the alkylesters with 2—20 C-atoms of the acids mentioned here-above, preferably acrylates, methacrylates, crotonates, fumarates, itaconates, maleates, laurates, versatates or hydroxymonomers such as hydroxyethylacrylate and hydroxypropylacrylate, acrylamide, acrylamide derivatives, diacetone acrylamide, sulphonic acids and sulphonates, such as styrene sulphonic acid, sodium vinyl sulphonate and vinyl sulphonic acid, monoesters of alkyl diols, dienes such as butadiene, vinyl chloride and olefins with 1—20 C atoms per molecule such as ethylene, propylene and butene.

Particularly suitable polyvinyl esters in the process according to the invention are polyvinyl benzoate and polyvinyl propionate.

The polyvinyl esters used preferably have a molecular mass of 50,000—5,000,000.

The said polyvinyl esters can be brought into the polymerization reactor in any suitable manner, for instance as dry substances or as alcoholic, particularly methanolic, solutions.

Customary primary suspending agents are gelatin, polymeric suspending agents based on maleic acid or acrylic acid, for instance copolymers of maleic acid and vinyl acetate. Very suitable primary suspending agents are polyvinyl alcohols with a degree of solvolysis of 70 to 99 moles % and cellulose derivatives, particularly hydroxypropyl cellulose, methylhydroxypropyl cellulose and hydroxymethyl cellulose. Very suitable also are mixtures of said polyvinyl alcohols and/or cellulose derivatives.

The invention is further elucidated by the following non restrictive examples and comparative experiments.

Example I

An enamelled autoclave of 100 l is filled with 26 kg vinyl chloride, 36.4 kg water, 15.6 g polyvinyl alcohol with an average degree of solvolysis of 79 moles % and a degree of polymerization of 1700 and 10.4 g of a polyvinyl propionate with an average degree of solvolysis lower than 25 moles %.

While being stirred, the whole of it is heated to about 330 °K and is kept at this temperature until the pressure in the autoclave, which was about 950 kPa, falls to about 800 kPa. The pressure is subsequently relieved and the polymerization is stopped. After that the polyvinyl chloride is separated off from the suspension and dried. Of this polyvinyl chloride the average particle size, the porosity, the bulk density, the volume resistance and the dry blend time are determined.

The average particle size (d) is determined with the screen analysis method described by Rosin and Rammler in Kolloid Zeitschrift *67* (1934), pp. 16—26 and Chem Ing. Techn., *24* (1942), pp. 25—31.

The porosity ($\varepsilon$) is determined according to the mercury intrusion method at a pressure of 12 MPa. L. A. de Wit and J. J. F. Scholten, J. Cat. *36* (1975), pp. 36—47, give a general exposition of the theory of this method and Guyer, Böhlen and Guyer, Helv. Chim. Acta *42* (1959), p. 2103, describe an apparatus for measuring the porosity according to this method.

The bulk density is determined according to ISO R60.

The volume resistance is determined according to ASTM D 257.

The dry blend time is determined by putting 50 parts by weight dioctyl phthalate, 100 parts by weight PVC and 5 parts by weight lead stabilizer in a Péchiney cup (described in ISO R4574) at 23°C and subsequently bringing the contents of this Péchiney cup to 88°C and then determining the dry blend time in the manner described in ASTM D 2396—69.

For the polyvinyl chloride a d of 149 µm, an $\varepsilon$ of $0.29 \times 10^{-3}$ m³/kg, a bulk density of 440 kg/m³, a volume resistance of $9 \times 10^{13}$ Ωcm and a dry blend time of 6.6 minutes are found.

Example II

Vinyl chloride is polymerized in a manner similar to that described in Example I, except that 15.6 g of the said polyvinyl propionate is added.

In a manner similar to that described in Example I, a d of 161 µm, an $\varepsilon$ of $0.27 \times 10^{-3}$ m³/kg, a bulk density of 470 kg/m³, a volume resistance of $8 \times 10^{13}$ Ωcm and a dry blend time of 6.9 minutes are found for the polyvinyl chloride.

Comparative Experiment A

Vinyl chloride is polymerized in a manner similar to that described in Example I, except that no polyvinyl propionate is added.

# EP 0 124 176 B1

In a manner similar to that described in Example I, a d of 240 μm, an ε of $0.17 \times 10^{-3}$ $m^3$/kg, a bulk density of 535 kg/$m^3$, a volume resistance of $8 \times 10^{13}$ Ωcm and a dry blend time of 15.0 minutes are found for the polyvinyl chloride.

Comparative Experiment B

Vinyl chloride is polymerized in a manner similar to that described in Example I, except that no polyvinyl propionate is added, but 41.6 g of a solution in methanol of, per 100 g methanol, 25 g of a polyvinyl alcohol with an average degree of solvolysis of 55 moles % and with a degree of polymerization of 580 and with a narrow distribution of the degree of solvolysis, i.e. a fraction of more than 80% (wt) has a degree of solvolysis of between 45 and 65 moles %.

In a manner similar to that described in Example I, a d of 155 μm, an ε of $0.29 \times 10^{-3}$ $m^3$/kg, a bulk density of 490 kg/$m^3$, a volume resistance of $3 \times 10^{13}$ Ωcm and a dry blend time of 7.0 minutes are found for the polyvinyl chloride.

Comparative Experiment C

Vinyl chloride is polymerized in a manner similar to that described in Example I, except that no polyvinyl propionate is added, but 41.6 g of a solution in 100 g methanol of 25 g of a polyvinyl alcohol with an average degree of solvolysis of 48 moles % (a product of the firm of Sigma commercially available under the name of Polivic S 202).

In a manner similar to that described in Example I, a d of 155 μm, and ε of $0.29 \times 10^{-3}$ $m^3$/kg, a bulk density of 485 kg/$m^3$, a volume resistance of $3 \times 10^{13}$ Ωcm and a dry blend time of 7.0 minutes are found for the polyvinyl chloride.

The results of the examples and of the comparative experiments are shown in the table below. In this table the meaning of the figures is:

1: number of the example or of the comparative experiment
2: d in μm
3: ε in $10^{-3}$ $m^3$/kg
4: bulk density in kg/$m^3$
5: volume resistance in $10^{13}$ Ωcm
6: dry blend time in minutes.

| 1 | 2 | 3 | 4 | 5 | 6 |
|---|---|---|---|---|---|
| I | 149 | 0.29 | 440 | 9 | 6.6 |
| II | 161 | 0.27 | 470 | 8 | 6.9 |
| A | 240 | 0.17 | 535 | 8 | 15.0 |
| B | 155 | 0.29 | 490 | 3 | 7.0 |
| C | 155 | 0.29 | 485 | 3 | 7.0 |

Furthermore, a number of experiments were made in which the number of fish eyes (fish eye number) was determined by gelling a composition with 100 parts by weight PVC and 50 parts by weight dioctylphthalate on a roller at 150°C and, after the gelling, mixing it for 7 minutes more and subsequently making a film of 0.1 mm and counting the number of dots per 100 $cm^2$. These experiments show that the number of fish eyes in the products made according to the invention was 1 or 2, whereas in the products made according tot the comparative experiments it ranged between 5 and 25.

## Claims

1. Process for preparing vinyl chloride polymers by suspension polymerization in a polymerization reactor of vinyl chloride, optionally in combination with at most 30% (wt) of one or more monomers copolymerizable therewith, with monomer-soluble, radical-forming initiators and optionally in the presence of primary suspending agents, characterized in that before or during this polymerization 0.01—0.5 part by weight of at least one polyvinyl ester with an average degree of solvolysis lower than 70 moles % is supplied to the polymerization reactor per 100 parts by weight of the starting monomer, which polyvinyl ester is chosen from the polymeric vinyl esters of aliphatic and/or aromatic carboxylic acids with 3—20 C-atoms per molecule.

2. Process according to claim 1, characterized in that a polyvinyl ester with an average degree of solvolysis lower than 55 moles % is applied.

3. Process according to claim 1 or 2, characterized in that a polyvinyl ester with an average degree of solvolysis lower than 25 moles % is applied.

4

4. Process according to any one of claims 1—3, characterized in that the polyvinyl ester applied is polyvinyl benzoate and/or polyvinyl propionate.

5. Vinyl chloride polymer prepared according to any one of claims 1—4.

## Patentansprüche

1. Verfahren zum Herstellen von Vinylchloridpolymeren durch Suspensionspolymerisation von Vinylchlorid, gegebenenfalls in Kombination mit höchstens 30% (Gew.) eines oder mehrerer damit copolymerisierbarer Monomere, mit monomerlöslichen radikalbildenden Initiatoren und gegebenenfalls in Anwesenheit von primären Suspendiermitteln in einem Polymerisationsreaktor, für Vinylchlorid dadurch gekennzeichnet, daß vor oder während dieser Polymerisation 0,01 bis 0,5 Gew.Teile mindestens eines Polyvinylesters mit einem mittleren Solvolysegrad von weniger als 70 Mol% dem Polymerisationsreaktor pro 100 Gew.Teile Ausgangsmonomer zugeführt werden, welcher Polyvinylester ausgewählt ist aus den polymeren Vinylestern von aliphatischen und/oder aromatischen Carbonsäuren mit 3 bis 20 C-Atomen pro Molekül.

2. Verfahren nach Anspruch 1, dadurch gekennzeichnet, daß ein Polyvinylester mit einem mittleren Solvolysegrad von weniger als 55 Mol% eingesetzt wird.

3. Verfahren nach Anspruch 1 oder 2, dadurch gekennzeichnet, daß ein Polyvinylester mit einem mittleren Solvolysegrad von weniger als 25 Mol% eingesetzt wird.

4. Verfahren nach einem der Ansprüche 1 bis 3, dadurch gekennzeichnet, daß der eingesetzte Polyvinylester Polyvinylbenzoat und/oder Polyvinylpropionat ist.

5. Vinylchloridpolymer, hergestellt nach einem der Ansprüche 1 bis 4.

## Revendications

1. Procédé de préparation de polymères de chlorure de vinyle par polymérisation en suspension dans un réacteur de polymérisation de chlorure de vinyle, facultativement en combinaison avec un maximum de 30% en poids d'un ou plusieurs monomères copolymérisables avec lui, en utilisant des activants radicalaires solubles dans les monomères et facultativement en présence d'agents primaires de suspension, caractérisé en ce qu'avant ou pendant cette polymérisation, on introduit de 0,01 à 0,5 partie en poids d'au moins un ester polyvinylique ayant un degré moyen de solvolyse inférieur à 70 moles% dans le réacteur de polymérisation par 100 parties en poids du monomère de départ, cet ester polyvinylique étant choisi parmi les esters vinyliques polymères des acides carboxyliques aliphatiques et/ou aromatiques contenant de 3 à 20 atomes de carbone par molécule.

2. Procédé selon la revendication 1, caractérisé en ce qu'on applique un ester polyvinylique ayant un degré de solvolyse inférieur à 55 moles%.

3. Procédé selon la revendication 1 ou 2, caractérisé en ce qu'on applique un ester polyvinylique ayant un degré moyen de solvolyse inférieur à 25 moles%.

4. Procédé selon l'une quelconque des revendications 1 à 3, caractérisé en ce que l'ester polyvinylique appliqué est le benzoate de polyvinyle et/ou le propionate de polyvinyle.

5. Polymère de chlorure de vinyle, préparé selon l'une quelconque des revendications 1 à 4.